Europäisches Patentamt

European Patent Office

Office européen des brevets

(19)

(11) **EP 0 641 500 B1**

(12) **EUROPÄISCHE PATENTSCHRIFT**

(45) Veröffentlichungstag und Bekanntmachung des Hinweises auf die Patenterteilung:
**09.04.1997 Patentblatt 1997/15**

(51) Int Cl.⁶: **H02M 3/335**

(21) Anmeldenummer: **92901685.5**

(86) Internationale Anmeldenummer:
**PCT/EP92/00042**

(22) Anmeldetag: **10.01.1992**

(87) Internationale Veröffentlichungsnummer:
**WO 92/13384 (06.08.1992 Gazette 1992/21)**

(54) **EINTAKT-DURCHFLUSSUMRICHTER MIT EINEM TRANSFORMATOR UND MIT ZWEI, DURCH SCHUTZMASSNAHMEN GESCHÜTZTEN ELEKTRONISCHEN SCHALTERN**

SINGLE-ENDED THROUGH-FLOW FREQUENCY CONVERTER WITH A TRANSFORMER AND TWO ELECTRONIC CIRCUITS PROTECTED BY PROTECTIVE MEASURES

CONVERTISSEUR DE FREQUENCE DE DEBIT A UNE ALTERNANCE COMPORTANT UN TRANSFORMATEUR ET DEUX COMMUTATEURS ELECTRONIQUES PROTEGES PAR DES MESURES DE PROTECTION

(84) Benannte Vertragsstaaten:
**AT BE CH DE ES FR GB IT LI NL SE**

(30) Priorität: **29.11.1991 EP 91101147**

(43) Veröffentlichungstag der Anmeldung:
**08.03.1995 Patentblatt 1995/10**

(73) Patentinhaber: **SIEMENS AKTIENGESELLSCHAFT**
**80333 München (DE)**

(72) Erfinder: **BRAKUS, Bogdan**
**D-8035 Stockdorf (DE)**

(56) Entgegenhaltungen:
**GB-A- 2 127 239          US-A- 3 373 334**
**US-A- 4 403 269**

• **PESC'87 RECORD 1987, BLACKSBURG, VIRGINIA, USA Seiten 3 - 12; KELKAR ET AL: 'A Computer-Aided Design and Simulation Toll for Switching Converters'**

**Beschreibung**

Die Erfindung bezieht sich auf einen wie im Oberbegriff des Patentanspruchs 1 angegebenen Eintakt-Durchflußumrichter mit einem Transformator und mit zwei, durch Schutzmaßnahmen geschützten elektronischen Schaltern.

Ein derartiger Umrichter ist bereits aus dem Manuskript Valvo, Schalt-Netzteile, Eine Vortragsreihe, November 1976, Kapitel "Eigenschaften und Arbeitsprinzipien", Seite 11 bekannt. Der bekannte Durchflußumrichter hat den Vorteil, daß eine Entmagnetisierungswicklung entfallen kann, weil der Transformator über die Primärwicklung und die Begrenzungsdioden entmagnetisiert wird. In der genannten Veröffentlichung ist ferner ausgeführt, daß diese Schaltung oft keine oder nur eine relativ hochohmige Schutzbeschaltung für den Transistor benötige und daher der Wirkungsgrad verhältnismäßig hoch sei.

Eine RCD-Beschaltung üblicher Art kann zwar die Belastung des Schalttransistors herabsetzen. Sie verlagert jedoch die Verlustleistung von einem Bauteil zum anderen.

Man kann andererseits versuchen, die Umschaltprobleme mit Hilfe von Resonanz- und Quasiresunanzumrichtern zu lösen. In diesem Fall müssen jedoch die Schaltelemente für vergleichsweise hohe Ströme und Spannungen ausgelegt werden, da dauernd eine hohe Blindleistung hin und her transportiert wird. Die Blindleistung kann dabei in der Größenordnung der Wirkleistung oder gar höher liegen. Die Folge ist neben einem erhöhten Aufwand ein reduzierter Wirkungsgrad.

Hohe Schaltfrequenzen haben den Vorteil, daß Bauteile mit vergleichsweise kleinen Abmessungen Verwendung finden können. Die Umschaltverluste in den Schaltelementen steigen jedoch proportional mit der Frequenz an. Dies kann zu einer erheblichen Belastung der Schaltelemente und unerwünschten Beeinträchtigung des Wirkungsgrades führen.

Aufgabe der Erfindung ist es, einen Eintakt-Durchflußumrichter der im Oberbegriff des Patentanspruchs 1 angegebenen Art und z.B. aus der US-A-4 403 269 bekannt derart auszubilden, daß sich für die beiden elektronischen Schalter sowohl beim Einschaltvorgang als auch beim Ausschaltvorgang eine möglichst verlustarme Schaltentlastung ergibt. Insbesondere soll der Durchflußumrichter ohne nennenswerte Wirkungsgradverluste arbeiten, einen möglichst kleinen Bauteilestreß im gesamten Arbeitsbereich aufweisen und möglichst hohe Schaltfrequenzen gestatten.

Gemäß der Erfindung wird der Durchflußumrichter zur Lösung dieser Aufgabe in der im kennzeichnenden Teil des Patentanspruchs 1 angegebenen Weise ausgebildet. Durch die erfindungsgemäßen Maßnahmen ergibt sich der Vorteil, daß mit Hilfe einer einfach realisierbaren Schutzschaltung ein wirksamer Schutz der elektronischen Schalter sowohl für den Ein- als auch für den Ausschaltvorgang erzielt wird.

Es gibt Durchflußumrichter, bei denen eine möglichst kleine Streuinduktivität des Transformators angestrebt wird. Dies ist insbesondere bei Umrichtern der Fall, die mehrere Ausgangskreise mit einer gemeinsamen EMK-Regelung aufweisen.

In diesem Fall ist es zweckmäßig, entsprechend der Weiterbildung nach Anspruch 2 in Serie zur Primärwicklung des Transformators eine Drossel vorzusehen.

Andererseits kann dann, wenn es auf eine niedrige Streuung nicht ankommt, durch Realisierung der Induktivität als Streuinduktivität ein besonders einfach realisierbarer Transformator Verwendung finden. Insbesondere kann man so bei der Herstellung des Transformators mit vergleichsweise wenigen Wicklungslagen auskommen, oder auf aufwendige Schachtelung der Primär- und Sekundärwicklung ganz verzichten.

Zweckmäßigerweise wird entsprechend Anspruch 3 die Folgefrequenz der Einschaltimpulse mit Hilfe einer Regeleinrichtung in vorgegebener Abhängigkeit von wenigstens einer Regelgröße eingestellt.

Bei der Weiterbildung der Erfindung nach Anspruch 4 ergibt sich, daß sich die Arbeitsfrequenz in einem weiten Lastbereich nur wenig ändert und auch bei extremen Betriebszuständen kontinuierlich ohne störende Unstetigkeiten und Sprünge verstellt wird. Hieraus resultiert der besondere Vorteil, daß im gesamten Arbeitsbereich ein praktisch gleichbleibend guter Schutz der elektronischen Schalter gewährleistet ist. Ein weiterer Vorteil besteht darin, daß die maximale Arbeitsfrequenz gegenüber einem pulsbreitenmodulierten Umrichter gleicher Schaltungstechnologie erheblich erhöht werden kann.

Zur Veränderung der Einschaltdauer wird vorzugsweise die im betreffenden Anwendungsfall dominierende Störgröße herangezogen. Bei der Weiterbildung der Erfindung nach Anspruch 5 ist dies die Eingangsspannung des Durchflußumrichters.

Die Erfindung wird anhand der in den Figuren 1, 2 und 4 bis 6 gezeigten Ausführungsbeispiele sowie anhand des in Figur 3 gezeigten Impulsdiagrammes näher erläutert.

Es zeigen

Fig. 1          einen Eintakt-Durchflußumrichter mit einer Schutzschaltung,
Fig. 2          eine Abwandlung des Umrichters nach Fig. 1,
Fig. 3          ein Impulsdiagramm für den Umrichter nach Fig. 1,

Figuren 4, 6 und 8        Abwandlungen des Durchflußumrichters nach Fig. 1 bezüglich der Bildung der Einschaltimpulse für die beiden elektronischen Schalter und die

Figuren 5 und 7        Impulsdiagramme für die Ausführungsformen nach Fig. 4 bzw. 6.

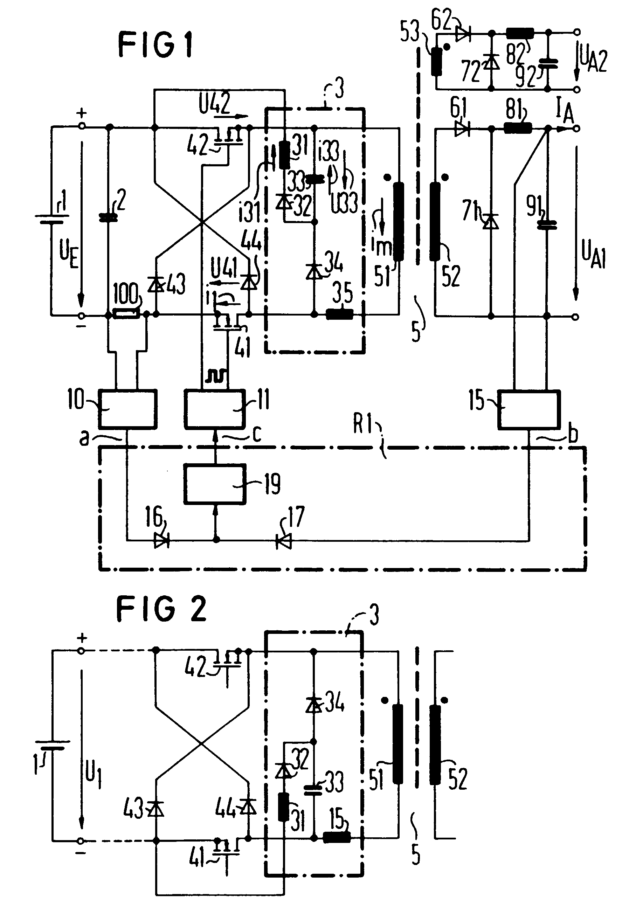

Fig. 1 zeigt einen Eintakt-Durchflußumrichter mit zwei, jeweils als elektronischer Schalter 41 und 42 dienenden Feldeffekttransistoren. Die von der Gleichspannungsquelle 1 gelieferte Eingangsspannung $U_E$ liegt am Kondensator 2, die Ausgangsspannung $U_{A1}$ am Kondensator 91. Parallel zum Kondensator 2 liegt in einem primärseitigen Hauptstromkreis eine aus der Drain-Source-Strecke des den elektronischen Schalter 42 bildenden Feldeffekttransistors, der Primärwicklung 51 des Transformators 5, der Drossel 35, der Drain-Source-Strecke des den elektronischen Schalter 41 bildenden Feldeffekttransistors und dem Meßwiderstand 100 gebildete Serienschaltung.

Die Primärwicklung 51 des Transformators 5 wird über die beiden elektronischen Schalter 41, 42 in einem vorgegebenen Richtungssinn an die Eingangsspannungsquelle 1 gelegt. Dieser Richtungssinn ergibt sich daraus, daß der mit einem Punkt markierte Anfang der Primärwicklung 51 mit der Plusklemme der Spannungsquelle 1 verbunden wird. Außerdem ist die Primärwicklung 51 über zwei Diodenstromzweige, deren Dioden 43, 44 in Bezug auf die Eingangsspannung $U_E$ in Sperrichtung gepolt sind, im anderen Richtungssinn an die Gleichspannungsquelle 1 angeschlossen. Dabei ist der Anfang der Primärwicklung 51 über die Diode 43 mit dem Minuspol der Spannungsquelle 1 verbunden.

Zwischen der Sekundärwicklung 52 des Transformators 5 und dem Kondensator 91 liegt die Gleichrichterdiode 61. In einem auf die Gleichrichterdiode 61 folgenden Querzweig ist die Freilaufdiode 71 angeordnet. In einem Längszweig zwischen Freilaufdiode 71 und Kondensator 91 liegt die Drossel 81. Am Kondensator 91 steht die Ausgangsspannung $U_{A1}$ zur Verfügung. In den nicht dargestellten, mit der Ausgangsspannung $U_{A1}$ gespeisten Verbraucher fließt der Speisestrom $I_A$.

An die weitere Sekundärwicklung 53 des Transformators 5 ist ein weiterer Ausgangskreis des Umrichters angeschlossen. Der weitere Ausgangskreis liefert die Ausgangsspannung $U_{A2}$ und enthält die Gleichrichterdiode 62, die Freilaufdiode 72, die Drossel 82 sowie den Kondensator 92. Er ist in gleicher Weise aufgebaut wie der an die Sekundärwicklung 61 angeschlossene Ausgangskreis.

Die Steuerelektroden der die elektronischen Schalter 41 und 42 bildenden Feldeffekttransistoren sind an Ausgänge des Treibers 11 angeschlossen, der durch den spannungsgesteuerten Oszillator 19 gesteuert wird. Die beiden Feldeffekttransistoren sind vom gleichen Leitfähigkeitstyp und werden mit gleichphasigen Einschaltimpulsen jeweils gleichzeitig ein- und ausgeschaltet.

Die Schutzschaltung 3 dient zum Schutz der elektronischen Schalter 41, 42 und sorgt für eine wirksame Ein- und Ausschaltentlastung. Die Schutzschaltung enthält die auf der Primärseite des Transformators 5 wirksame Serieninduktivität und die beiden Serienschaltungen 33, 34 und 31, 32. Die eine Serienschaltung besteht aus dem Kondensator 33 und der Diode 34 und ist parallel zur Primärwicklung 51 des Transformators 5 angeordnet. Die andere Serienschaltung besteht aus der Diode 32 und der Drossel 31 und liegt zwischen dem Verbindungspunkt von Diode 34 und Kondensator 33 und der mit dem Pluspol der Eingangsspannungsquelle 1 verbundenen Drain-Elektrode des Feldeffekttransistors, der den elektronischen Schalter 42 bildet. Dabei handelt es sich um den elektronischen Schalter, der mit dem Kondensator 33 der einen Serienschaltung verbunden ist. Die Dioden 32, 34 der beiden Serienschaltungen sind im Bezug auf die Eingangsgleichspannung $U_E$ in Sperrichtung gepolt.

Am Meßwiderstand 100 liegt der Stromregler 10, am Ausgang des Umrichters der Spannungsregler 15. Beide Regler 10 und 15 sind über je eine Diode 16 bzw. 17 an den Eingang des spannungsgesteuerten Oszillators 13 geführt, so daß sich eine sogenannte Ablöseregelung ergibt. Dabei wird am Steuereingang des Oszillators 19 von den beiden Ausgangsspannungen der Regler 10 und 15 die jeweils größere wirksam. Der Oszillator 19 erzeugt daher eine Folge von Impulsen $U_P$, deren Folgefrequenz durch die Regler 10 und 15 bestimmt wird. Diese Impulse $U_P$ veranlassen den Treiber 11, an die elektronischen Schalter Einschaltimpulse vorgegebener Dauer abzugeben.

Fig. 2 zeigt einen Teil des Eintakt-Durchflußumrichters nach Fig. 1 mit angewandelter Schutzschaltung 3. Der Unterschied zur Fig. 1 besteht darin, daß in der einen Serienschaltung 33, 34 der Kondensator 33 und die Diode 34 miteinander vertauscht sind und daß daher die andere Serienschaltung 31, 32 anstatt mit der Drain-Elektrode des elektronischen Schalters 42 mit der Source-Elektrode des elektronischen Schalters 41 verbunden ist. Die Wirkungsweise ist - abgesehen von vertauschten Rollen der beiden elektronischen Schalter 41 und 42 - die gleiche.

Bei den Umrichtern nach Fig. 1 und 2 werden die beiden elektronischen Schalter 41 und 42 jeweils gleichzeitig ein- und ausgeschaltet, d.h. synchron gesteuert. Sie sind während der Dauer der Einschaltimpulse leitend gesteuert.

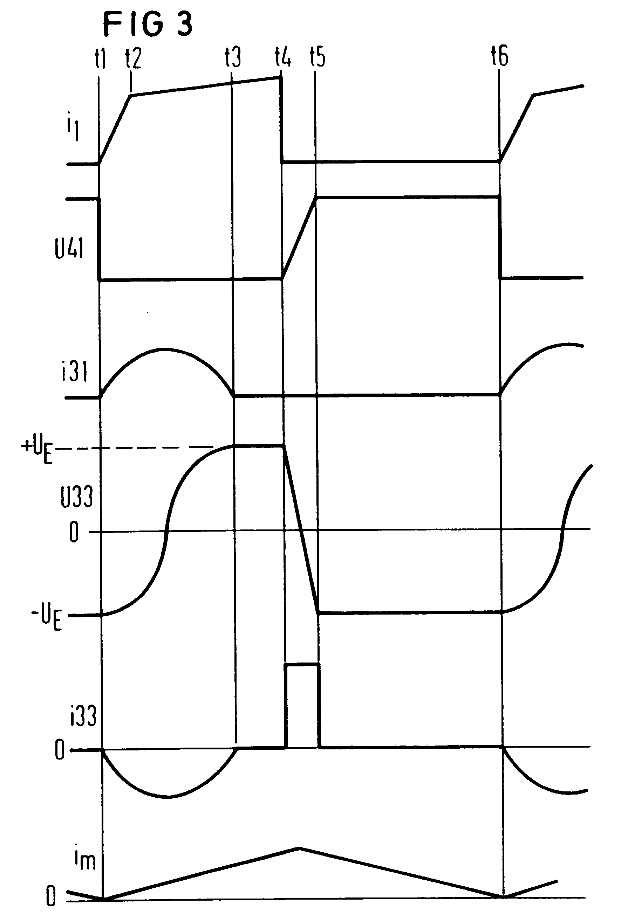

Im folgenden wird ein Schaltzyklus mit Hilfe des Impulsdiagramms nach Fig. 3 beschrieben:

Im Zeitabschnitt tl-t2 werden die Einschaltverluste durch eine im eingangsseitigen Hauptstromkreis wirksame Schutzinduktivität L35 praktisch eliminiert, da der Strom il in den beiden elektronischen Schaltern 41 und 42 nur mit der definierten Steilheit $di/dt = U_E/L_{35}$ ansteigen kann.

Im gezeigten Ausführungsbeispiel ist die Schutzinduktivität L35 durch die Drossel 15, d.h. als ein diskretes Bauelement realisiert. An die Stelle der Drossel 15 kann gegebenenfalls eine im Hinblick auf die gewünschte Einschaltentlastung der elektronischen Schalter 41, 42 ausreichend groß bemessene Streuinduktivität des Transformator 5 treten. Ferner kann eine Drossel mit kleiner Induktivität in Verbindung mit einer entsprechend bemessenen Streuinduktivität zweckmäßig sein.

Die Schutzinduktivität beträgt etwa

$$L_{35} = U_E \cdot \frac{\Delta t}{\Delta I}$$

wobei $\Delta t$ die Sperrverzögerungszeit $t_{rr}$ (revers recovery) der Freilaufdiode 71 und $\Delta I$ der Stromhub in den beiden Schaltern 41 und 42 während des Einschaltvorgangs ist.

Im Zeitabschnitt tl-t3 wird der vom vorhergehenden Zyklus im Sinne des Zählpfeils U33 negativ geladene, als Schutzkondensator dienende Kondensator 33 über den Resonanzkreis 31, 33, über die Diode 32 und den leitenden elektronischen Schalter 42 umgeladen. Der Umladevorgang ist zum Zeitpunkt t3 beendet. Wie der zeitliche Verlauf der Größen $i_{31}$ und U33 zeigt, verhindert die Diode 32 eine Rückladung des Kondensators 33.

Im anschließenden Zeitabschnitt t3-t4 zeigt sich keine Zustandsänderung außer dem Anstieg des Magnetisierungsstromes $i_m$ im Transformator 5.

Im folgenden Zeitabschnitt t4-t5 werden die beiden Schalter 41 und 42 gesperrt. Wie aus dem Verlauf des Stromes i33 hervorgeht, übernimmt die Kapazität C33 des Kondensators 33 über die Diode 34 den von der Schutzinduktivität L33 eingeprägten Laststrom vollständig. Dadurch sind die elektronsichen Schalter 41 und 42 stromlos und entlastet. Der Spannungsanstieg ist durch die Gleichung

$$du/dt = i1/C33$$

definiert.

Nach dem Erreichen der maximalen negativen Spannung am Kondensator 33, die der Eingangsspannung $U_E$ entspricht, wird die überschüssige Energie aus der Schutzinduktivität L35 über die als Clamping-Dioden wirkenden Dioden 43 und 44 an die Eingangsspannungsquelle 1 abgegeben. Wie aus dem Verlauf der Größen i1 und $U_{41}$ hervorgeht, sind die Abschaltverluste an den elektronischen Schaltern 41 und 42 praktisch eliminiert. Der Kommutierungsvorgang in den Gleichrichtern 61 und 71 bzw. 62 und 72 ist vollendet. Die Freilaufdiode 71 bzw. 72 übernimmt den Ausgangsstrom.

Im anschließenden Zeitabschnitt t5-t6 kann der Transformator 5 über die Dioden 43, 44 auf die Eingangsspannung $U_E$ abmagnetisiert werden, wie der zeitliche Verlauf des Magnetisierungsstromes $i_m$ zeigt.

Schließlich beginnt der neue Zeitzyklus.

Aus der beschriebenen Wirkungsweise des Umrichters und der Schutzschaltung 3 ergibt sich, daß sowohl der Ein- als auch der Ausschaltvorgang der elektronischen Schalter 41 und 42 praktisch verlustlos verlaufen.

Die in der Schutzinduktivität L35 während der Einschaltphase gespeicherte magnetische Energie wird in der Ausschaltphase verlustarm in die Kapazität C33 des Kondensators 33 bzw. in die Eingangsspannungsquelle für die Eingangsspannung $U_E$ geliefert. Die während des Ausschaltvorganges im Kondensator 33 gespeicherte elektrische Ladung wird durch den Schwingkreis praktisch vollständig und verlustarm umgeladen. Der Strom im elektronischen Schalter 42 ist durch den Schwingvorgang zwar etwas höher als im elektronischen Schalter 41. Auch er hat jedoch einen induktiven Charakter und die Zusatzverluste im elektronischen Schalter 42 sind minimal. In der Sperrphase kann die Summe der Spannungen U41 und U42 an den Transistoren 41 und 42 nicht höher werden als die Eingangsspannung $U_E$.

Im Unterschied zu Resonanzumrichtern wird nur ein kleiner Teil der übertragbaren Leistung als Blindleistung hin und her transportiert. Dies trägt dazu bei, daß die Komponenten keinem unnötigen Streß ausgesetzt sind.

Die Bauteile der Schutzschaltung 3 sind in Verbindung mit dem Durchflußumrichter so zu bemessen, daß sich die vorstehend beschriebene Funktion ergibt. Ein zweckmäßiges Bemessungsbeispiel für den Fall, daß in Fig. 1 der zweite Ausgangskreis fehlt, geht aus der folgenden Tabelle hervor:

L35 =     20µH
C33 =     1,8 nF
L31 =     56µH
$L_Q$ =     980µH
$\bar{u}$ =     1
$U_E$ =     40V
$U_A$ =     8,4V
$I_A$ =     0,5A
L81 =     660µH

| | |
|---|---|
| f | 300 kHz |
| $\gamma$ | 0,5 |

Dabei ist der Tastgrad $\gamma = t_{EIN}/T$ mit $L_Q$ die Querinduktivität und $\ddot{u}$ das Übersetzungsverhältnis des Transformators 5 bezeichnet. L81 ist die Induktivität der Drossel 81.

Der Durchflußumrichter nach Fig. 1 enthält eine Regelvorrichtung R1, mit deren Hilfe die Folgefrequenz von Einschaltimpulsen konstanter Dauer variiert wird. Abweichend davon kann gegebenenfalls eine Pulsbreitenmodulation, insbesondere in Verbindung mit einer Variation der Impulsfolgefrequenz vorgesehen sein. Bei alleiniger Pulsbreitenmodulation kann unter Umständen eine so starke Verkürzung der Einschaltzeit auftreten, daß die Dimensionierung des Schwingkreises für die Umladung des als Schutzkondensator dienenden Kondensators 33 Schwierigkeiten bereitet, da sowohl die Resonanzfrequenz als auch die Stromamplitude während des Umladens sehr hoch gewählt werden müßten.

Derartige Schwierigkeiten lassen sich vorteilhaft mit einer Regel- bzw. Steuervorrichtung vermeiden, die sowohl die Dauer als auch die Folgefrequenz der Einschaltimpulse variiert.

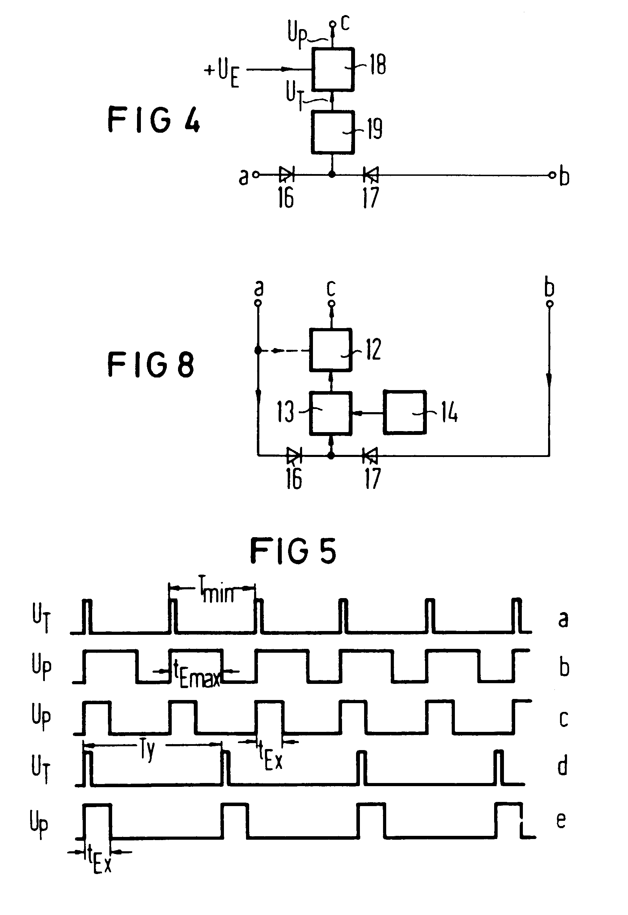

Die Regelschaltung nach Fig. 4 enthält den Pulsgenerator 18 mit vorgeschaltetem spannungsgesteuerten Oszillator 19. Der Pulsgenerator 18 liegt mit einem Eingang am Eingang des Umrichters, d.h. an der Eingangsspannung $U_E$. Ein weiterer Eingang ist an den spannungsgesteuerten Oszillator 19 angeschlossen und erhält vom Oszillator 19 eine Taktspannung $U_T$ variabler Frequenz.

Der Pulsgenerator 18 erzeugt eine Folge von Impulsen $U_P$, deren Folgefrequenz durch den spannungsgesteuerten Oszillator 19 vorgegeben ist und deren Einschaltdauer umgekehrt proportional der Eingangsspannung ist.

Im allgemeinen liefert der Pulsgenerator 18 Pulse $U_P$ bestimmter Einschaltdauer $t_E$. Die Wiederholfrequenz wird von dem spannungsgesteuerten Oszillator VCO bzw. 19 entsprechend dem Arbeitspunkt des I-Reglers 10 oder U-Reglers 15 eingestellt. Damit entfällt die Notwendigkeit, einen Puls weiter stark verkürzen zu müssen. Im Grenzfall kann die der minimalen Periodendauer $T_{min}$ entsprechende maximale Frequenz durch die minimal realisierbare Einschaltdauer und den gewünschten Tastgrad bestimmt werden, und zwar nach der Beziehung:

$$f = \frac{\gamma}{t_E} \qquad\qquad (1)$$

Dabei ist f die Wiederholfrequenz der Einschaltimpuls e, $\gamma$ der Tastgrad und $t_E$ die Dauer der Einschaltpulse.

Bei einem Einschaltpuls mit einer Dauer $t_E = 0{,}5\ \mu s$ und dem Tastgrad $\gamma = 0{,}5$ ergibt sich danach eine Frequenz von 1 MHz. Die Dauer des Einschaltpulses hängt von der Eingangsspannung $U_E$ ab. Sie ist umgekehrt proportional der Eingangsspannung

$$t_E \sim \frac{I}{U_E} \qquad\qquad (2)$$

Die Änderung der Eingangsspannung $U_E$ ist bei dem Durchflußumrichter die dominante Störgröße.

Beim idealisierten verlustlosen Umrichter gilt die Beziehung:

$$U_A = U_E \cdot \gamma \frac{I}{\ddot{u}} = U_E \cdot t_E \cdot f \frac{I}{\ddot{u}} \qquad\qquad (3)$$

Bleibt nach Einführung der Beziehung (2) das Produkt $U_E \cdot t_E$ konstant, so braucht bei einer Eingangsspannungsänderung die Frequenz nicht geändert zu werden, um die Ausgangsspannung $U_A$ konstant zu halten.

Die Steuerung der Einschaltzeit in Abhängigkeit von der Eingangsspannung allein ist eine einfach realisierbare Steuerung und weist daher auch bei hohen Frequenzen keine schaltungstechnischen Probleme auf. Dies bedeutet, daß der Umrichter nach Fig. 4 im wesentlichen ohne größere Frequenzverschiebungen arbeitet.

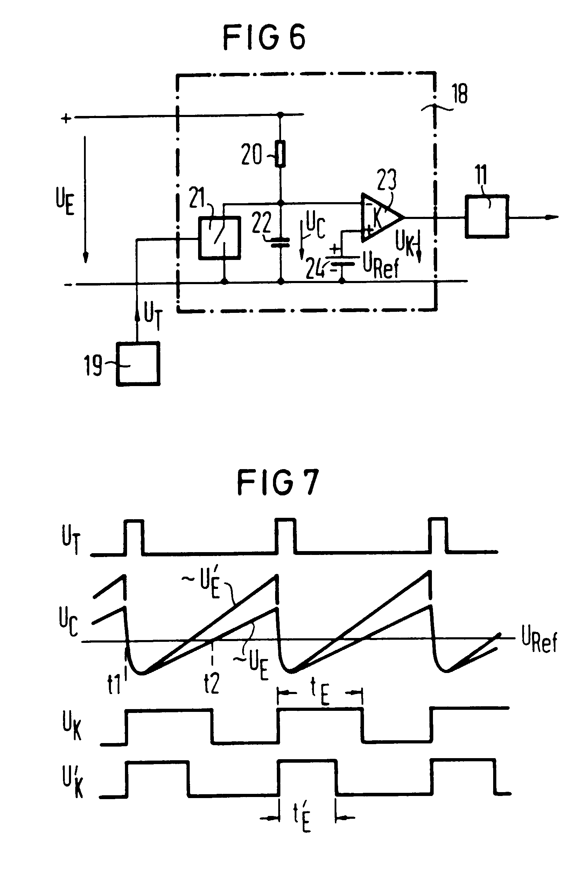

Die Pulsdiagramme in Fig. 5 zeigen das prinzipielle Verhalten des Umrichters bei verschiedenen Betriebszuständen:

a) In der Anlaufphase bzw. bei zu geringer Ausgangsspannung stellt der spannungsgesteuerte Oszillator (19) die maximale Frequenz ein. Dies entspricht der minimalen Periodendauer $T_{min}$ der Taktpulse $U_T$.

b) Bei der minimalen Eingangsspannung liefert der Pulsgenerator 18 den Einschaltpuls $U_P$ mit maximaler Dauer $t_{E\ max}$.

c) Eine Erhöhung der Eingangsspannung hat eine Verkürzung der Einschaltzeit auf einen neuen Wert $t_{Ex}$ zur Folge, ohne daß sich dabei die Frequenz verändert.

d/e) Die beiden Diagramme zeigen die Frequenzreduzierung bei starker Entlastung oder bei Überlast und unveränderter Eingangsspannung $U_E$. Es stellt sich die längere Periodendauer $T_y$ bei gleichbleibender Einschaltzeit $t_{Ex}$ ein.

Fig. 6 zeigt eine zweckmäßige Ausführungsform für den Pulsgenerator 18 des Umrichters nach Fig. 4. Am Eingang des Umrichters, d.h. an der Eingangsspannung $U_E$ liegt die aus dem Widerstand 20 und dem Kondensator 22 bestehende Serienschaltung. Parallel zum Kondensator 22 liegt der gesteuerte Schalter 21, der durch die Ausgangsspannung $U_T$ des spannungsgesteuerten Oszillator 19 gesteuert wird. Der Komparator 23 ist mit seinem nicht invertierenden Eingang über die Referenzspannungsquelle 24 mit dem Minuspol des Umrichtereinganges und mit seinem invertierenden Eingang an den Verbindungspunkt von Widerstand 20 und Kondensator 22 geführt. Am Ausgang des Komperators 23 liegt der Treiber 11.

Wie sich aus dem Impulsdiagramm nach Fig. 7 ergibt, hat der Pulsgenerator 18 eine spannungsabhängige Eingangzeit. Der spannungsgesteuerte Oszillator 19 gibt an seinem Ausgang die Puls folge $U_T$ ab. Die Spannung $U_C$ am Kondensator 22 hat einen sägezahnförmigen Verlauf, wobei die Steigung der Anstiegsflanke des Impulses jeweils proportional der Eingangsspannung $U_E$ ist. Am Ausgang des Komparators 23 entsteht die Spannung $U_K$, die aus einer Folge von Rechteckimpulsen besteht. Die Anstiegsflanke der Rechteckimpulse entspricht dem Einschalten des Komparators zum Zeitpunkt t1, die Abstiegsflanke dem Ausschalten des Komparators zum Zeitpunkt t2. Die Dauer eines Rechteckimpulses entspricht der Einschaltzeit des im Hauptstromkreis liegenden elektronischen Schalters und ist mit $t_E$ bezeichnet. Die Ausgangsspannung $U_K$ des Komparators 23 weist eine Verkürzung der Einschaltzeit $t_E'$ bei Erhöhung der Eingangsspannung vom Wert $U_E$ auf den Wert $U_E'$ auf.

Die Regelschaltung nach Fig. 8 unterscheidet sich von der Regelschaltung R1 des Durchflußumrichters nach Fig. 1 dadurch, daß anstelle der Vorrichtung zur Frequenzmodulation eine Logigschaltung 12, ein Impulsweitenmodulator 13 und ein Taktgeber 14 vorgesehen ist.

Durch die bei den beschriebenen Ausführungsformen vorgesehene Konstante bzw. durch Vorsteuerung wenig variable Einschaltdauer läßt sich der Resonanzkreis L31/C33 für alle Betriebszustände problemlos dimensionieren. Die Einschaltdauer des elektronischen Schalters 42 kann optimal für den Umladevorgang genutzt werden. Ein weiterer Vorteil besteht darin, daß sich die Funktion der Schutzelemente weitgehend frei von sonstigen Funktionen des Umrichters dimensionieren läßt.

Die beschriebenen Durchflußumrichter lassen sich daher vorteilhaft in Stromversorgungsmodulen zur Speisung von Baugruppen der elektrischen Nachrichtenübertragungstechnik verwenden. Sie sind auch für Umsetzung höherer Leistungen aus der Netzspannung (Schaltnetzgeräte, Ladegleichrichter) geeignet.

**Patentansprüche**

1. Eintakt-Durchflußumrichter mit einem Transformator (5), der eine in einem primärseitigen Hauptstromkreis des Umrichters liegende Primärwicklung (51) und wenigstens eine in einem Ausgangsstromkreis liegende Sekundärwicklung (52, 53) aufweist, wobei die Primärwicklung (51) des Transformators (5) über zwei mit Hilfe von Einschaltimpulsen synchron ein- und ausschaltbare durch eine Schutzschaltung geschützte elektronische Schalter (41, 42) in einem vorgegebenen Richtungssinn an die Eingangsspannungsquelle (1) schaltbar ist und über zwei Diodenstromzweige, deren Dioden (43, 44) in Bezug auf die Eingangsspannung ($U_E$) in Sperrichtung gepolt sind, im anderen Richtungssinn an die Gleichspannungsquelle (1) angeschlossen ist und wobei an wenigstens eine Sekundärwicklung (52, 53) des Transformators (5) ein Ausgangskreis mit einer Gleichrichterdiode (61, 62), einer Freilaufdiode (71, 72) und einer Drossel (81) angeschlossen ist,
   **dadurch gekennzeichnet**,
   daß die zum Schutz der elektronischen Schalter (41, 42) vorgesehene Schutzschaltung eine auf der Primärseite des Transformators wirksame Serieninduktivität (L35) und zwei Serienschaltungen enthält, von denen die eine aus einem Kondensator (33) und einer Diode (34) besteht und parallel zur Primärwicklung (51) des Transformators (5) angeordnet ist und von denen die andere aus einer Diode (32) und einer Drossel (31) besteht und zwischen dem Verbindungspunkt von Diode (34) und Kondensator (33) der einen Serienschaltung und dem mit der Eingangsspannungsquelle (1) verbundenen Anschluß des mit dem Kondensator (33) der einen Serienschaltung verbundenen elektronischen Schalters (42 bzw. 41) liegt und daß die Dioden (32, 34) der beiden Serienschaltungen in Bezug auf die Eingangsgleichspannung ($U_E$) in Sperrichtung gepolt sind und wobei die Drossel (31) und der Kondensator (33) einen Resonanzkreis bilden.

**2.** Eintakt-Durchflußumrichter nach Anspruch 1,
**dadurch gekennzeichnet**,

daß der Transformator (5) mehrere Sekundärwicklungen (52, 53) aufweist, an die jeweils ein eigener Ausgangsstromkreis angeschlossen ist und
daß die in eingangsseitigen Hauptstromkreis wirksame Induktivität (Ls) wenigstens zum Teil durch eine in Serie zur Primärwicklung (50) des Transformators (5) liegende Drossel (15, 35) gebildet ist.

**3.** Eintakt-Durchflußumrichter nach den Ansprüchen 1 oder 2,
**dadurch gekennzeichnet**,
daß die Folgefrequenz der die elektronischen Schalter (41, 42) leitend steuernden Einschaltimpulse durch eine wenigstens einen Regler enthaltende Regelvorrichtung einstellbar ist.

**4.** Eintakt-Durchflußumrichter nach Anspruch 3,
**dadurch gekennzeichnet**,
daß die Dauer der die elektronischen Schalter (41, 42) leitend steuernden Einschaltimpulse in vorgegebener Abhängigkeit von wenigstens einer Störgröße veränderbar ist.

**5.** Eintakt-Durchflußumrichter nach Anspruch 4,
**dadurch gekennzeichnet**,

daß die Dauer der Einschaltimpulse umgekehrt proportional der Eingangsspannung ($U_E$) ist und
daß die Folgefrequenz durch eine wenigstens einen Regler (10, 15) enthaltende Regelvorrichtung einstellbar ist.

**Claims**

**1.** Single-ended forward converter with a transformer (5), which has a primary winding (51) situated in a primary-side main circuit of the converter and at least one secondary winding (52, 53) situated in an output circuit, the primary winding (51) of the transformer (5) being switchable to the input voltage source (1) in a specified directional sense via two electronic switches (41, 42) which can be switched on and off synchronously with the aid of switch-on pulses and which are protected by a protective circuit, and the primary winding being connected to the direct voltage source (1) in the other directional sense via two diode current branches whose diodes (43, 44) are polarized in the reverse direction in relation to the input voltage ($U_E$), and an output circuit containing a rectifier diode (61, 62), a free-wheeling diode (71, 72) and an inductor (81) being connected to at least one secondary winding (52, 53) of the transformer (5), characterized in that the protective circuit provided to protect the electronic switches (41, 42) comprises a series inductance (L35) effective on the primary side of the transformer and two series circuits, of which the one comprises a capacitor (33) and a diode (34) and is arranged in parallel with the primary winding (51) of the transformer(s), and of which the other comprises a diode (32) and an inductor (31) and is situated between the junction of diode (34) and capacitor (33) of the one series circuit and the terminal, connected to the input voltage source (1), of the electronic switch (42 or 41, respectively) connected to the capacitor (33) of the one series circuit, and in that the diodes (32, 34) of the two series circuits are polarized in the reverse direction in relation to the input direct voltage ($U_E$), and the inductor (31) and the capacitor (33) forming a resonant circuit.

**2.** Single-ended forward converter according to Claim 1, characterized in that the transformer (5) has a plurality of secondary windings (52, 53), to each of which a separate output circuit is connected, and in that the inductance (LS) effective in the input-side main circuit is formed at least in part by an inductor (15, 35) situated in series with the primary winding (50) of the transformer (5).

**3.** Single-ended forward converter according to Claim 1 or 2, characterized in that the repetition rate of the switch-on pulses which render the electronic switches (41, 42) conducting can be adjusted by a control device comprising at least one control.

**4.** Single-ended forward converter according to Claim 3, characterized in that the duration of the switch-on pulses which render the electronic switches (41, 42) conducting can be varied as a specified function of at least one influencing quantity.

5. Single-ended forward converter according to Claim 4, characterized in that the duration of the switch-on pulses is inversely proportional to the input voltage ($U_E$), and in that the repetition rate can be adjusted by a control device comprising at least one controller (10, 15).

**Revendications**

1. Convertisseur statique direct de fréquence à une alternance, comportant un transformateur (5), qui comprend un enroulement primaire (51) situé dans un circuit principal côté primaire du convertisseur statique de fréquence et au moins un enroulement secondaire (52, 53) situé dans un circuit de sortie, dans lequel l'enroulement primaire (51) du transformateur (5) peut être branché dans un sens prédéterminé à la source de tension d'entrée (1) au moyen de deux interrupteurs électroniques (41, 42), qui peuvent être branchés et débranchés de manière synchrone par des impulsions de branchement et qui sont protégés par un circuit protecteur, dans lequel cet enroulement primaire est raccordé dans l'autre sens à la source de tension d'entrée (1) par l'intermédiaire de deux branches de courant à diode, dont les diodes (43, 44) sont polarisées dans le sens de blocage par rapport à la tension d'entrée (UE), et dans lequel un circuit de sortie comportant une diode de redressement (61, 62), une diode de roue libre (71, 72) et une bobine de self (81) est raccordé à au moins un enroulement secondaire (52, 53) du transformateur (5),
   caractérisé par le fait que
      le circuit protecteur prévu pour la protection des interrupteurs électroniques (41, 42) contient une inductance série (L35), active du côté primaire du transformateur, et deux circuits série, dont l'un est composé d'un condensateur (33) et d'une diode (34) et est placé en parallèle avec l'enroulement primaire (51) du transformateur (5), et dont l'autre est composé d'une diode (32) et d'une bobine de self (31) et se trouve entre le point de liaison de la diode (34) et du condensateur (33) d'un premier circuit série et la borne, reliée à la source de tension d'entrée (1), de l'interrupteur électronique (42 ou 41) relié au condensateur (33) du premier circuit série, les diodes (32, 34) des deux circuits série sont polarisées dans le sens de blocage par rapport à la tension continue d'entrée ($U_E$), et la bobine de self (31) et le condensateur (33) forment un circuit résonnant.

2. Convertisseur statique direct de fréquence à une alternance selon la revendication 1,
      caractérisé par le fait que

      le transformateur (5) comporte plusieurs enroulements secondaires (52, 53) à chacun desquels est raccordé à chaque fois un circuit de sortie particulier et
      l'inductance (Ls) active dans le circuit principal côté entrée est formée au moins en partie par une bobine de self (15, 35) qui se trouve en série avec l'enroulement primaire (50) du transformateur (5).

3. Convertisseur statique direct de fréquence à une alternance selon les revendications 1 ou 2,
      caractérisé par le fait que
      la fréquence de répétition des impulsions de branchement qui commandent la mise à l'état conducteur des interrupteurs électroniques (41, 42) est réglable au moyen d'un dispositif de régulation contenant au moins un régulateur.

4. Convertisseur statique direct de fréquence à une alternance selon la revendication 3,
      caractérisé par le fait que
      la durée des impulsions de branchement qui commandent la mise à l'état conducteur des interrupteurs électroniques (41, 42) est modifiable de manière prédéterminée en fonction d'au moins une grandeur perturbatrice.

5. Convertisseur statique direct de fréquence à une alternance selon la revendication 4,
      caractérisé par le fait que

      la durée des impulsions de branchement est inversement proportionnelle à la tension d'entrée ($U_E$) et
      la fréquence de répétition est réglable au moyen d'un dispositif de régulation contenant au moins un régulateur (10, 15).

FIG 1

FIG 2

# FIG 3

# FIG 4

# FIG 8

# FIG 5

# FIG 6

# FIG 7